# EUROPEAN PATENT APPLICATION

(11) **EP 4 322 303 A1**
(43) Date of publication of application: **14.02.2024**
(21) Application number: 22917742.3
(22) Date of filing: 05.01.2022
(51) Int. Cl.: H01M 50/342

(54) **BATTERY CELL, BATTERY, ELECTRICAL APPARATUS, AND METHOD AND APPARATUS FOR PREPARING BATTERY CELL**

(71) Applicant: Contemporary Amperex Technology Co., Limited, Ningde, Fujian 352100 (CN)
(72) Inventor: LUO, Wei, Ningde, Fujian 352100 (CN); YANG, Longfei, Ningde, Fujian 352100 (CN); CHEN, Wenwei, Ningde, Fujian 352100 (CN); YANG, Limei, Ningde, Fujian 352100 (CN); ZHONG, Qineng, Ningde, Fujian 352100 (CN)
(74) Representative: Gong, Jinping
(86) International application number: PCT/CN2022/070341
(87) International publication number: WO 2023/130266

(57) **Abstract**

Embodiments of the present disclosure provide a battery cell, a battery, a power consumption device, and a method and device for producing a battery cell so that the safety of a battery can be enhanced. A battery cell (20) includes a casing (210) configured to accommodate an electrode assembly (22); and a pressure relief mechanism (213) disposed on the casing (210) and the pressure relief mechanism (213) including: a pressure relief passage (2133); and a first pressure relief element (2131) and a second pressure relief element (2132) that are disposed on the pressure relief passage (2133) and close the pressure relief passage (2133) separately. In a venting direction of the pressure relief passage (2133), the second pressure relief element (2132) is disposed upstream of the first pressure relief element (2131) and communicated with an internal space of the casing (210), wherein the second pressure relief element (2132) has a rigidity of greater than or equal to 25 N/mm. With this solution, the second pressure relief element protects the first pressure relief element, and an initial opening pressure of the first pressure relief element may be designed to be relatively small to guarantee the safety performance of the battery cell.

## Description

### TECHNICAL FIELD

Embodiments of the present disclosure relate to the field of batteries, and more particularly, to a battery cell, a battery, a power consumption device, and a method and device for producing a battery cell.

### BACKGROUND

Energy conservation and emission reduction are key points of the sustainable development of the automobile industry. In this case, electric vehicles have become an important part of the sustainable development of the automobile industry for their advantages of energy conservation and environment protection. For electric vehicles, a battery technology is an important factor relating to their development.

In the development of the battery technology, safety is also a nonnegligible issue in addition to the improvement of battery performance. If the safety of a battery cannot be guaranteed, the battery cannot be used. Therefore, how to enhance the safety of a battery is a technical problem needing to be solved urgently in the battery technology.

### SUMMARY

The present disclosure provides a battery cell, a battery, a power consumption device, and a method and device for producing a battery cell so that the safety of a battery can be enhanced.

In a first aspect, a battery cell is provided, including: a casing configured to accommodate an electrode assembly; and a pressure relief mechanism disposed on the casing, wherein the pressure relief mechanism includes: a pressure relief passage configured to vent a gas out of the casing from an internal space of the casing; and a first pressure relief element and a second pressure relief element that are disposed on the pressure relief passage and close the pressure relief passage separately. In a venting direction of the pressure relief passage, the second pressure relief element is disposed upstream of the first pressure relief element and communicated with the internal space of the casing, wherein the second pressure relief element has a rigidity of greater than or equal to 25 N/mm.

With the technical solution of the embodiment of the present disclosure, the pressure relief mechanism of the battery cell includes two pressure relief elements disposed on the pressure relief passage, wherein in the venting direction of the pressure relief passage, the second pressure relief element is disposed upstream of the first pressure relief element and communicated with the internal space of the casing, and the second pressure relief element has a rigidity of greater than or equal to 25 N/mm. Therefore, before being opened, the second pressure relief element is capable of absorbing and resisting a changing gas pressure in the internal space of the casing, and may have a small deformation quantity caused by the changing gas pressure. While preventing the changing gas pressure from acting directly on the first pressure relief element, the second pressure relief element, based on its great rigidity, is capable of further reducing the influence of the changing gas pressure on the first pressure relief element, and thus may play a good role in protecting the first pressure relief element. Therefore, an aging rate of the first pressure relief element and an attenuation rate of an opening pressure are low. An ex-factory initial opening pressure of the first pressure relief element may be designed to be relatively small to guarantee the safety performance of the battery cell.

In some possible embodiments, the rigidity of the second pressure relief element is greater than or equal to a rigidity of the first pressure relief element.

With the technical solution of this embodiment, the second pressure relief element has a relatively high rigidity and is capable of playing a good role in protecting the first pressure relief element. In addition, the first pressure relief element has a relatively low rigidity, and in the event that the first pressure relief element and the second pressure relief element are made of a same material, the first pressure relief element may have a smaller thickness than the second pressure relief element so that space needed to mount the first pressure relief element can be reduced.

In some possible embodiments, a ratio of the rigidity of first pressure relief element to the rigidity of the second pressure relief element ranges from 20% to 80%.

In some possible embodiments, the second pressure relief element has an initial opening pressure of greater than or equal to 0.2 MPa.

With the technical solution of the embodiments, because of having a certain initial opening pressure, the second pressure relief element can be prevented from being actuated and opened at an initial running stage of the battery cell. Therefore, the second pressure relief element can keep a closed state at the initial running stage of the battery cell and absorb a gas pressure change in the internal space of the casing within a certain time range, thereby playing a role in protecting the first pressure relief element.

In some possible embodiments, the initial opening pressure of the second pressure relief element is greater than or equal to an initial opening pressure of the first pressure relief element.

With the technical solution of the embodiments, the second pressure relief element has a larger initial opening pressure and the first pressure relief element has a smaller initial opening pressure. At an early running stage of the battery cell, the second pressure relief element serves for protecting the first pressure relief element to prevent rapid aging of the first pressure relief element. After the battery cell runs for a period of time and the second pressure relief element is actuated and opened, the first pressure relief element having the smaller initial opening pressure is capable of achieving a good pressure relief effect on the battery cell to guarantee the safety performance of the battery cell. In addition, compared with the technical solution that the initial opening pressure of the second pressure relief element is smaller than the initial opening pressure of the first pressure relief element. In the technical solution of the embodiment of the present disclosure, the first pressure relief element may play a role in additionally strengthening the second pressure relief element having the larger initial opening pressure by means of a closed space in the pressure relief passage such that the pressure relief mechanism has a large overall initial opening pressure to further guarantee the safety performance of the battery cell.

In some possible embodiments, the initial opening pressure of the second pressure relief element is 1 to 3 times the initial opening pressure of the first pressure relief element.

In some possible embodiments, an area of the second pressure relief element is smaller than or equal to an area of the first pressure relief element.

With the technical solution of the embodiments, in the event that the area of the second pressure relief element is equal to the area of the first pressure relief element, the first pressure relief element and the second pressure relief element may be manufactured and mounted conveniently, and the manufacturing efficiency of the pressure relief mechanism and the battery cell can be improved. In additional, in the event that the area of the second pressure relief element is smaller than the area of the first pressure relief element, when the gas pressure in the internal space of the casing acts on the second pressure relief element, the deformation quantity of the second pressure relief element is small. Hence, the deformation of the second pressure relief element has less influence on the gas pressure in the pressure relief passage and the first pressure relief element, and the performance of the first pressure relief element can be further guaranteed to guarantee the safety performance of the battery cell.

In some possible embodiments, a ratio of the area of the second pressure relief element to the area of the first pressure relief element ranges from 40% to 100%.

In some possible embodiments, the pressure relief passage includes a first portion passage and a second portion passage. In the venting direction of the pressure relief passage, the second portion passage is disposed upstream of the first portion passage, and a cross-sectional area of the second portion passage in a radial direction thereof is smaller than a cross-sectional area of the first portion passage in a radial direction thereof. The first pressure relief element covers an end, facing an external space for the casing, of the first portion passage, and the second pressure relief element covers an end, facing the internal space of the casing, of the second portion passage.

With the technical solution of the embodiments, the pressure relief passage is designed as a two-section structure, wherein the cross-sectional areas of the first portion passage and the second portion passage are different so that the first pressure relief element and the second pressure relief element having different areas can be disposed on the first portion passage and the second portion passage, respectively, and the pressure relief passage is closed with the first pressure relief element and the second pressure relief element. In the event that the area of the second pressure relief element is smaller than the area of the first pressure relief element, when the gas pressure in the internal space of the casing acts on the second pressure relief element, the deformation quantity of the second pressure relief element is small. Hence, the deformation of the second pressure relief element has less influence on the pressure relief passage and the first pressure relief element, and the performance of the first pressure relief element can be further guaranteed to guarantee the safety performance of the battery cell.

In some possible embodiments, the pressure relief passage has a volume of greater than or equal to 0.35 mL, and/or the pressure relief passage has a volume of less than or equal to 130 mL.

With the technical solution of the embodiments, the pressure relief passage has the volume of greater than or equal to 0.35 mL so that the deformation of the second pressure relief element may have less influence on the gas pressure in the pressure relief passage. Thus, the influence of the deformation quantity of the second pressure relief element on the first pressure relief element is reduced, thereby guaranteeing the performance of the first pressure relief element to guarantee the safety performance of the battery cell. In addition, the pressure relief passage may have the volume of less than or equal to 130 mL to avoid that the pressure relief passage having a large volume occupies more space of the battery cell to affect an energy density of the battery cell.

In some possible embodiments, the pressure relief mechanism further includes: a protective layer disposed on a side, facing the external space for the casing, of the first pressure relief element and configured to protect the first pressure relief element.

With the technical solution of the embodiments, the protective layer may prevent the environment outside the casing from affecting the first pressure relief element, thereby guaranteeing the performance of the first pressure relief element to improve the safety performance of the battery cell.

In some possible embodiments, the first pressure relief element is made of aluminum, and/or the second pressure relief element is made of aluminum, an aluminum alloy or steel.

With the technical solution of the embodiments, the second pressure relief element may be allowed to have a high rigidity and a small deformation quantity. The first pressure relief element has a lower rigidity than the second pressure relief element. In the event that the two pressure relief elements are made of a same material, the first pressure relief element has a small thickness, and hence may have a low rigidity and does not need to occupy excessive mounting space. In the event that the two pressure relief elements are made of different materials, the material of the second pressure relief element may have a greater rigidity than the material of the first pressure relief element.

In a second aspect, a battery is provided, including a box and the battery cell in the first aspect or in any possible embodiment in the first aspect, wherein the battery cell is accommodated in the box.

In a third aspect, a power consumption device is provided, including the battery in the second aspect that is configured to provide electric power for the power consumption device.

In a fourth aspect, a method for producing a battery cell is provided, including: providing a casing, wherein a pressure relief mechanism is disposed on the casing and the pressure relief mechanism includes: a pressure relief passage configured to vent a gas out of the casing from an internal space of the casing; and a first pressure relief element and a second pressure relief element that are disposed on the pressure relief passage and close the pressure relief passage separately; and in a venting direction of the pressure relief passage, the second pressure relief element is disposed upstream of the first pressure relief element and communicated with the internal space of the casing, wherein the second pressure relief element has a rigidity of greater than or equal to 25 N/mm; providing an electrode assembly; and accommodating the electrode assembly in the casing.

In a fifth aspect, a device for producing a battery cell includes: a providing module configured to provide a casing and an electrode assembly, wherein a pressure relief mechanism is disposed on the casing and the pressure relief mechanism includes: a pressure relief passage configured to vent a gas out of the casing from an internal space of the casing; and a first pressure relief element and a second pressure relief element that are disposed on the pressure relief passage and close the pressure relief passage separately; and in a venting direction of the pressure relief passage, the second pressure relief element is disposed upstream of the first pressure relief element and communicated with the internal space of the casing, wherein the second pressure relief element has a rigidity of greater than or equal to 25 N/mm; and a mounting module configured to accommodate the electrode assembly in the casing.

With the technical solution of the embodiment of the present disclosure, the pressure relief mechanism of the battery cell includes two pressure relief elements disposed on the pressure relief passage, wherein in the venting direction of the pressure relief passage, the second pressure relief element is disposed upstream of the first pressure relief element and communicated with the internal space of the casing, and the second pressure relief element has a rigidity of greater than or equal to 25 N/mm. Therefore, before being opened, the second pressure relief element is capable of absorbing and resisting a changing gas pressure in the internal space of the casing, and may have a small deformation quantity caused by the changing gas pressure. While preventing the changing gas pressure from acting directly on the first pressure relief element, the second pressure relief element, based on its great rigidity, is capable of further reducing the influence of the changing gas pressure on the first pressure relief element, and thus may play a good role in protecting the first pressure relief element. Therefore, an aging rate of the first pressure relief element and an attenuation rate of an opening pressure are low. An ex-factory initial opening pressure of the first pressure relief element may be designed to be relatively small to guarantee the safety performance of the battery cell.

### BRIEF DESCRIPTION OF THE DRAWINGS

To describe the technical solutions in the embodiments of the present disclosure more clearly, the accompanying drawings needed in the embodiments of the present disclosure will be briefly described below. Apparently, the accompanying drawings described below show merely some embodiments of the present disclosure, and other drawings may be derived from these drawings by a person of ordinary skill in the art without creative efforts.
FIG. 1 is a structural schematic diagram of a vehicle disclosed in an embodiment of the present disclosure.
FIG. 2 is a structural schematic diagram of a battery disclosed in an embodiment of the present disclosure.
FIG. 3 is an exploded structural schematic diagram of a battery cell disclosed in an embodiment of the present disclosure.
FIG. 4 is an exploded structural schematic diagram of another battery cell disclosed in an embodiment of the present disclosure.
FIG. 5 is a partially exploded structural schematic diagram of a battery cell disclosed in an embodiment of the present disclosure.
FIG. 6 is a cross-sectional schematic view taken along A-A' in FIG. 5.
FIG. 7 is a partially enlarged schematic view of part B in FIG. 6.
FIG. 8 is another partially enlarged schematic view of part B in FIG. 6.
FIG. 9 is a flowchart of a method for producing a battery cell disclosed in an embodiment of the present disclosure.
FIG. 10 is a schematic block diagram of a device for producing a battery cell disclosed in an embodiment of the present disclosure.

In the drawings, figures are not drawn to actual scale.

### DETAILED DESCRIPTION OF THE EMBODIMENTS

The embodiments of the present disclosure are described in more detail below in conjunction with the accompanying drawings and the embodiments. The following detailed descriptions of the embodiments and the accompanying drawings are intended to exemplarily explain the principles of the present disclosure rather than to limit the scope of the present disclosure. In other words, the present disclosure is not limited to the described embodiments.

In the description of the present disclosure, it needs to be noted that, unless otherwise specified, "a plurality of' means two or more; and orientations or positional relationships indicated by terms such as "upper", "lower", "left", "right", "inside" and "outside" are meant to facilitate and simplify the description of the present disclosure rather than to indicate or imply that the mentioned device or element must have a specific orientation or must be constructed and operated in a specific orientation, and thus cannot be construed as a limitation to the present disclosure. Moreover, terms such as "first" "second" and "third" are used only for the purpose of description and cannot be construed as indicating or implying relative importance. "Perpendicular" is not perpendicular in the strict sense, but within an allowable error range. "Parallel" is not parallel in the strict sense, but within an allowable error range.

The orientation words used in the following description all indicate directions shown in the figures and do not define a specific structure of the present disclosure. In the description of the present disclosure, it also needs to be noted that, unless otherwise specified and defined, the terms "mount", "connected with" and "connected to" should be understood in a broad sense. For example, a connection may be a fixed connection, a detachable connection, or an integral connection; and it may be a direct connection or an indirect connection by means of an intermediate medium. Those of ordinary skill in the art may understand specific meanings of the above-mentioned terms in the present disclosure based on a specific situation.

The term "and/or" used in the present disclosure merely describes an association relationship between associated objects, and indicates that three types of relationships may exist. For example, A and/or B may indicate that A exists alone, both A and B exist, or B exists alone. In addition, the character "/" in the present disclosure generally indicates that the associated objects are in an "or" relationship.

Unless otherwise defined, all technical and scientific terms used in the present disclosure have same meanings as those generally understood by those skilled in the technical field of the present disclosure. The terms used in the description of the present disclosure are merely for the purpose of describing specific embodiments, and are not intended to limit the present disclosure. The terms "comprise", "include" and "have" and their any variants used in the description and claims of the present disclosure and the above description of the drawings are intended to cover the non-exclusive inclusion. The terms "first", "second" and the like used in the description and claims of the present disclosure and in the above description of the drawings are meant to distinguish between different objects rather than to describe a specific order or a primary and secondary relation.

The "embodiment" mentioned in the present disclosure means that a specific feature, structure or characteristic described in combination with the embodiment may be included in at least one embodiment of the present disclosure. The phrase appearing in different parts of the specification does not necessarily refer to the same embodiment or an independent or alternative embodiment exclusive of other embodiments. It may be explicitly or implicitly appreciated by those skilled in the art that the embodiment described in the present disclosure may be combined with other embodiments.

In the present disclosure, a battery refers to a physical module including one or more battery cells to provide electric power. For example, the battery mentioned in the present disclosure may include a battery module, a battery pack or the like. The battery generally includes a box for packaging one or more battery cells. The box may avoid a liquid or other foreign matters from charging or discharging of the battery cells.

Optionally, the battery cells may include a lithium-ion secondary battery, a lithium-ion primary battery, a lithium-sulfur battery, a sodium-lithium ion battery, a sodium-ion battery, a magnesium-ion battery or the like, which will not be limited in the embodiments of the present disclosure. The battery cells may be in a cylindrical shape, a flat shape, a cuboid shape or other shapes, which will not be limited in the embodiments of the present disclosure. The battery cells are generally classified by packaging approach into a cylindrical battery cell, a cuboid battery cell and a pouch battery cell, which will not be limited in the embodiments of the present disclosure.

A battery cell includes an electrode assembly and an electrolyte solution. The electrode assembly is composed of a positive tab, a negative tab and an isolating membrane. The battery cell operates mainly depending on the movement of metal ions between the positive tab and the negative tab. The positive tab includes a positive collector and a positive active material layer. The positive active material layer is coated on a surface of the positive collector. A collector not coated with the positive active material layer protrudes from the collector coated with the positive active material layer, and the collector coated with the positive active material layer acts as a positive tab. Taking a lithium-ion battery for example, the positive collector may be made of aluminum, and the positive active material may be lithium cobaltate, lithium iron phosphate, ternary lithium, lithium manganate or the like. The negative tab includes a negative collector and a negative active material layer. The negative active material layer is coated on a surface of the negative collector. A collector not coated with the negative active material layer protrudes from the collector coated with the negative active material layer, and the collector coated with the negative active material layer acts as a negative tab. The negative collector may be made of copper, and the negative active material may be carbon, silicon or the like. To guarantee that blowout does not occur at a large current, a plurality of positive tabs are provided, which are stacked on top of one another, and a plurality of negative tabs are provided, which are stacked on top of one another. The isolating membrane may be made of polypropylene, polyethylene or the like. Moreover, the electrode assembly may be of a coiled structure or a laminated structure, and the embodiments of the present disclosure are not limited thereto.

To develop the battery technology, design factors in multiple aspects need to be considered simultaneously, e.g., performance parameters such as energy density, cycle life, discharge capacity and charge-discharge rate. In addition, the safety of a safety also needs to be considered.

For a battery, major safety hazards are from the charge and discharge processes. To improve the safety performance of the battery, a pressure relief mechanism may be generally provided for a battery cell. The pressure relief mechanism refers to an element or component that is actuated to release an internal pressure or temperature of the battery cell when the internal pressure or temperature reaches a predetermined threshold. The predetermined threshold may be adjusted according to different design requirements. The predetermined threshold may depend on a material of one or more of a positive tab, a negative tab, an electrolyte solution and an isolating mechanism in the battery cell. The pressure relief mechanism may be a pressure sensitive or temperature sensitive element or component. That is, when the internal pressure or temperature of the battery cell reaches the predetermined threshold, the pressure relief mechanism is actuated to form a passage for releasing the internal pressure or temperature. Optionally, in the present disclosure, in the event that the pressure relief mechanism is a pressure sensitive element, the internal pressure of the battery cell when the pressure relief mechanism is actuated may also be referred to as an opening pressure or actuating pressure of the pressure relief mechanism.

The term "actuated" used in the present disclosure refers to that the pressure relief mechanism is caused to act such that the internal pressure and temperature of the battery cell are released. An action of the pressure relief mechanism may include but be not limited to: at least a portion of the pressure relief mechanism being cracked, split, molten or the like. After the pressure relief mechanism is actuated, a high-temperature high-pressure substance within the battery cell may be discharged from the pressure relief mechanism to the outside as an emission. In this way, the pressure of the battery cell can be released in case of a controllable pressure or temperature, thereby avoiding a potential more serious accident.

The emission from the battery cell mentioned in the present disclosure includes but is not limited to: an electrolyte solution, dissolved or split positive and negative tabs, debris of an isolating membrane, high-temperature high-pressure gas and flame generated by a reaction, and the like.

The pressure relief mechanism on the battery cell has an important influence on the safety of the battery. For example, when the battery cell is short-circuited, overcharged or the like, thermal runaway may be caused within the battery cell, resulting in a sudden increase in pressure or temperature. In this case, the pressure relief mechanism may be actuated to release the internal pressure and temperature to the outside to prevent the battery cell from explosion and fire.

At present, in the battery cell, generally the pressure relief mechanism is directly communicated with the internal space of the battery cell. During continuous running of the battery cell, the gas pressure within the battery cell may change, and the changing gas pressure directly acts on the pressure relief mechanism, causing the pressure relief mechanism to produce fatigue deformation and age gradually. Therefore, the opening pressure of the pressure relief mechanism will decrease gradually. After the battery cell runs for a long time, when the pressure within the battery cell is small, it may also trigger the pressure relief mechanism to be actuated, thereby affecting continued use of the battery cell and even the battery and affecting the service life of the battery. In some solutions, to avoid this case, an initial opening pressure of the pressure relief mechanism may be designed to be large, thereby avoiding the opening pressure of the aged pressure relief mechanism from being too small. It needs to be noted that before the battery cell comes into use, i.e., when the battery cell just leaves the factory, the opening pressure of the pressure relief mechanism thereof may be referred to as the initial opening pressure. When the initial opening pressure of the pressure relief mechanism is designed to be large, the pressure relief mechanism may be actuated in case of a large internal pressure of the battery cell at the early running stage of the battery cell although the overall service life of the battery cell can be prevented from being affected by aging of the pressure relief mechanism to a certain extent. This technical solution may cause some potential safety hazards to a certain extent, affecting the safety performance of the battery cell.

In view of the above, the present disclosure provides a battery cell. A pressure relief mechanism of the battery cell includes a first pressure relief element, a second pressure relief element, and a pressure relief passage between the two pressure relief elements. Specifically, in a venting direction of the pressure relief passage, the second pressure relief element is disposed upstream of the first pressure relief element and communicated with the internal space of the battery cell. The second pressure relief element has a rigidity of greater than or equal to 25 N/mm. The second pressure relief element is capable of bearing and absorbing a gas pressure change within the battery cell and thus plays a role in protecting the first pressure relief element. Therefore, the first pressure relief element will not be affected by the changing gas pressure within the battery cell and its aging is relatively slow. Correspondingly, an initial opening pressure of the first pressure relief element may also be designed to be relatively low. With the technical solution of the embodiment of the present disclosure, not only can the safety performance of the battery cell at an early running stage be guaranteed, but also the service life of the battery cell can be guaranteed. The overall performance of the battery cell can be improved comprehensively.

The technical solution described in the embodiment of the present disclosure is suitable for various devices using batteries, such as a mobile phone, a portable apparatus, a laptop, a battery cart, an electric toy, an electric tool, an electric vehicle, a ship and a spacecraft. For example, the spacecraft includes a plane, a rocket, a space shuttle, a spaceship and the like.

It will be appreciated that the technical solution described in the embodiment of the present disclosure is not limited to the devices described above, and is also applicable to all devices using batteries. However, for the brevity of description, the following embodiments are all described by taking an electric vehicle for example.

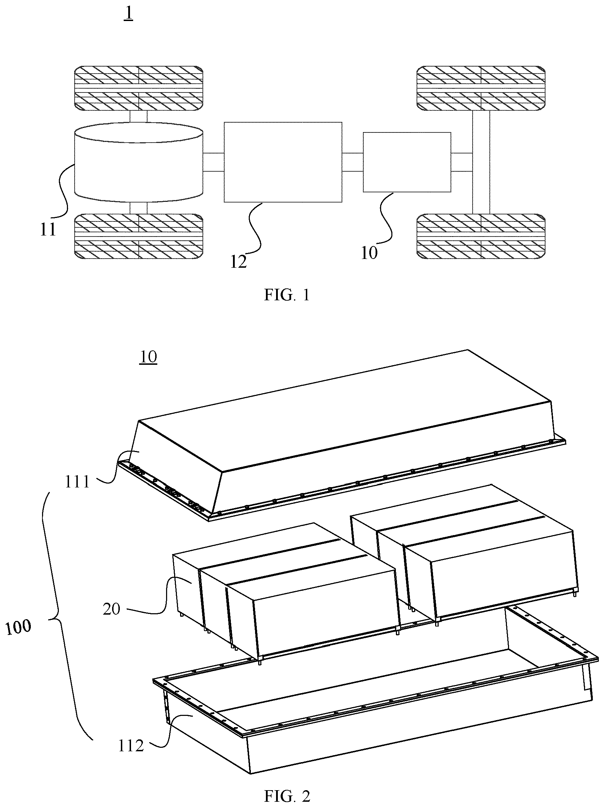

For example, as shown in FIG. 1 which is a structural schematic diagram of a vehicle 1 according to one embodiment of the present disclosure, the vehicle 1 may be a fuel vehicle, a gas vehicle or a new energy vehicle. The new energy vehicle may be a battery electric vehicle, a hybrid electric vehicle, an extended-range vehicle or the like. A motor 11, a controller 12 and a battery 10 may be disposed within the vehicle 1. The controller 12 is configured to control the battery 10 to supply power to the motor 11. For example, the battery 10 may be disposed at the bottom, the head or the tail of the vehicle 1. The battery 10 may be configured to supply power to the vehicle 1. For example, the battery 10 may serve as an operative power source for the vehicle 1 and be used in a circuit system of the vehicle 1, for example, for meeting operating power demands of the vehicle 1 during start, navigation and running. In another embodiment of the present disclosure, the battery 10 may not only serve as the operative power source for the vehicle 1 and may also serve as a driving power source for the vehicle 1 to provide driving power for the vehicle 1 instead of or partially instead of a fuel or natural gas.

To meet different power utilization demands, the battery may include a plurality of battery cells, wherein the plurality of battery cells may be connected in series or in parallel or in series-parallel, the series-parallel is a combination of series connection and parallel connection. The battery may also be referred to as a battery pack. Optionally, a plurality of battery cells may be firstly connected in series or in parallel or in series-parallel to form a battery module, and a plurality of battery modules are then connected in series or in parallel or in series-parallel to form a battery. In other words, a plurality of battery cells may be directly combined into a battery, or may be firstly combined into battery modules which are then combined into a battery.

For example, as shown in FIG. 2 which is a structural schematic diagram of a battery 10 according to one embodiment of the present disclosure, the battery 10 may include a plurality of battery cells 20. The battery 10 may also include a box 100 (or referred to as a cover). The interior of the box 100 is of a hollow structure, and the plurality of battery cells 20 are accommodated in the box 100. As shown in FIG. 2, the box 100 may include two portions, which are referred to as a first portion 111 and a second portion 112 here, respectively. The first portion 111 and the second portion 112 are buckled together. A shape of the first portion 111 and the second portion 112 may be determined according to a combined shape of the plurality of battery cells 20. The first portion 111 and the second portion 112 may each have an opening. For example, the first portion 111 and the second portion 112 may each be hollow cuboid and each have only one open side. The opening of the first portion 111 is disposed opposite to the opening of the second portion 112, and the first portion 111 and the second portion 112 are buckled to each other to form the box 100 having a closed chamber. The plurality of battery cells 20 are connected to one another in parallel or in series or in a parallel-series combined manner and then placed into the box 100 formed by buckling the first portion 111 and the second portion 112 together.

Optionally, the battery 10 may also include other structures, which will not be redundantly described here one by one. For example, the battery 10 may also include a bus component configured to realize electrical connection between the plurality of battery cells 20, for example, in parallel or in series or in series-parallel. Specifically, the bus component may be connected to electrode terminals of the battery cells 20 to realize electrical connection between the battery cells 20. Further, the bus component may be fixed to the electrode terminals of the battery cells 20 by welding. Electric power of the plurality of battery cells 20 may be further extracted by means of an electrically conducting mechanism penetrating through the box. Optionally, the electrically conducting mechanism may also be part of the bus component.

According to different power demands, the number of the battery cells 20 may be set to any value. The plurality of battery cells 20 may be connected in series, in parallel or in series-parallel to realize a large capacity or power. Since a large number of battery cells 20 may be included in each battery 10, for the convenience of mounting, the battery cells 20 may be disposed in groups, and each group of battery cells 20 forms a battery module. The number of the battery cells 20 included in each battery module is not limited and may be set as needed.

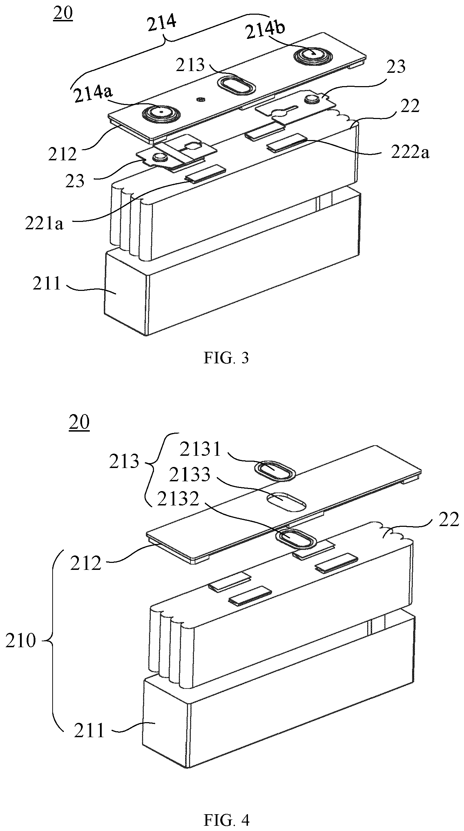

FIG. 3 illustrates an exploded structural schematic diagram of a battery cell 20 according to an embodiment of the present disclosure.

As shown in FIG. 3, the battery cell 20 includes one or more electrode assemblies 22, a housing 211 and a cover plate 212. A wall of the housing 211 and the cover plate 212 are both referred to as walls of the battery cell 20. The shape of the housing 211 is determined according to a combined shape of the one or more electrode assemblies 22. For example, the housing 211 may be a hollow cuboid or cube or cylinder, and one face of the housing 211 has an opening through which the one or more electrode assemblies 22 can be placed into the housing 211. For example, when the housing 211 is the hollow cuboid or cube, one plane of the housing 211 is an open side. That is, there is no wall in this plane such that the inside and outside of the housing 211 are communicated. When the housing 211 is the hollow cylinder, an end of the housing 211 is an open side. That is, there is no wall at this end such that the inside and outside of the housing 211 are communicated. The cover 212 covers the opening and is connected to the housing 211 to form an enclosed cavity for holding the electrode assembly 22. The housing 211 is filled with an electrolyte, e.g., an electrolyte solution.

The battery cell 20 may also include two electrode terminals 214 that may be disposed on the cover plate 212. The cover plate 212 is usually in a flat plate shape. The two electrode terminals 214 are fixed to a flat surface of the cover plate 212. The two electrode terminals 214 are a positive electrode terminal 214a and a negative electrode terminal 214b. Each electrode terminal 214 is correspondingly provided with one connecting member 23 (or referred to as a bus member 23) that is located between the cover plate 212 and the electrode assembly 22 and configured to electrically connect the electrode assembly 22 with the electrode terminal 214.

As shown in FIG. 3, each electrode assembly 22 has a first tab 221a and a second tab 222a. The first tab 221a and the second tab 222a have opposite polarities. For example, when the first tab 221a is a positive tab, the second tab 222a is a negative tab. The first tab(s) 221a of the one or more electrode assemblies 22 is/are connected to one electrode terminal through one connecting member 23, and the second tab(s) 222a of the one or more electrode assemblies 22 is/are connected to the other electrode terminal through the other connecting member 23. For example, the positive electrode terminal 214a is connected to the positive tab through one connecting member 23, and the negative electrode terminal 214b is connected to the negative tab through the other connecting member 23.

A single one or a plurality of electrode assemblies 22 may be disposed in the battery cell 20 according to actual use requirements. As shown in FIG. 3, 4 independent electrode assemblies 22 are disposed within the battery cell 20.

As an example, a pressure relief mechanism 213 may also be disposed on one wall of the battery cell 20. The pressure relief mechanism 213 is configured to be actuated to release an internal pressure of the battery cell 20 when the internal pressure reaches a threshold.

Optionally, in another embodiment of the present disclosure, the pressure relief mechanism 213 and the electrode terminal 214 are disposed on the same wall of the battery cell 20. For example, as shown in FIG. 3, both of the electrode terminal 214 and the pressure relief mechanism 213 may be disposed on a top wall (i.e., the cover plate 212) of the battery cell 20.

The pressure relief mechanism 213 and the electrode terminal 214 are disposed on the same wall of the battery cell 20, e.g., on the cover plate 212 of the battery cell 20. Thus, the pressure relief mechanism 213 and the electrode terminal 214 can be mounted conveniently, which is conducive to improving the production efficiency of the battery 10.

Optionally, in one embodiment of the present disclosure, the pressure relief mechanism 213 and the electrode terminal 214 are disposed on different walls of the battery cell 20. For example, the electrode terminal 214 of the battery cell 20 may be disposed on the top wall (i.e., the cover plate 212) of the battery cell 20. The pressure relief mechanism 213 may be disposed on another wall, different from the top wall, of the battery cell 20. For example, the pressure relief mechanism 213 is disposed on a bottom wall opposite to the top wall.

The above-mentioned pressure relief mechanism 213 may be part of the wall where it is located, or may be of a split type structure with the wall where it is located, e.g., fixed to the wall where it is located by welding. Optionally, in an embodiment of the present disclosure, the pressure relief mechanism 213 may be a pressure sensitive pressure relief mechanism configured to be cracked when an internal gas pressure of the battery cell 20 with the pressure relief mechanism 213 reaches a threshold.

As an example, in the embodiment shown in FIG. 3, the pressure relief mechanism 213 may be provided with a nick which is located at a weakest position of the pressure relief mechanism 213. When the battery cell 20 generates too much gas to cause the internal pressure of the housing 211 to rise and reach a threshold, the pressure relief mechanism 213 may be cracked at the nick such that the inside and outside of the housing 211 are communicated and the gas pressure is released to the outside through the crack of the pressure relief mechanism 213, thus avoiding the battery cell 20 from explosion.

FIG. 4 illustrates an exploded structural schematic diagram of a battery cell 20 provided in an embodiment of the present disclosure.

As shown in FIG. 4, in the embodiment of the present disclosure, the battery cell 20 includes: a casing 210 configured to accommodate an electrode assembly 22; and a pressure relief mechanism 213 disposed on the casing 210, wherein the pressure relief mechanism 213 includes: a pressure relief passage 2133 configured to vent a gas out of the casing 210 from an internal space of the casing 210; and a first pressure relief element 2131 and a second pressure relief element 2132 that are disposed on the pressure relief passage 2133 and close the pressure relief passage 2133 separately; and in a venting direction of the pressure relief passage 2133, the second pressure relief element 2132 is disposed upstream of the first pressure relief element 2131 and communicated with the internal space of the casing 210, wherein the second pressure relief element 2132 has a rigidity of greater than or equal to 25 N/mm.

Specifically, in the embodiment of the present disclosure, the casing 210 is of a solid structure with a hollow cavity, wherein the hollow cavity is configured to accommodate one or more electrode assemblies 22 that interact with an electrolyte solution to produce electric power of the battery cell 20. It will be understood that a shape of the casing 210 is adaptable to a shape of the one or more electrode assemblies 22, and includes but is not limited to a polyhedral structure, a cylindrical structure and the like.

As a non-limiting example, as shown in FIG. 4, the casing 210 may include a housing 211 and a cover plate 212. The housing 211 and the cover plate 212 are buckled to each other to form a hollow cavity for accommodating the one or more electrode assemblies 22 and the electrolyte solution. The related technical solution of the housing 211, the cover plate 212 and the electrode assemblies 22 may be known with reference to the above related description of the embodiment shown in FIG. 3, which will not be described redundantly here.

Optionally, in the embodiment shown in FIG. 4, the pressure relief mechanism 213 is disposed on the cover plate 212 of the casing 210. In addition, in other embodiments, the pressure relief mechanism 213 may also be disposed on any wall of the housing 211 of the casing 210. For ease of description, the following embodiment is described by taking for example that the pressure relief mechanism 213 is disposed on the cover plate 212, and solutions of the pressure relief mechanism 213 being disposed on other walls of the casing 210 may be known with reference to the following related description, which will not be described redundantly herein.

Specifically, as shown in FIG. 4, the pressure relief mechanism 213 includes the pressure relief passage 2133. The pressure relief passage 2133 may be a through hole formed in the cover plate 212, and has one end communicated with the internal space of the casing 210 and the other end communicated with an external space for the casing 210. The electrode assemblies 22 and the electrolyte solution are accommodated in the internal space of the casing 210. When the electrode assemblies 22 react with the electrolyte solution, a reaction gas may be produced, which affects a pressure in the internal space of the casing 210. When the pressure in the internal space of the casing 210 reaches a preset threshold, the gas inside the casing 210 may be vented to the outside of the battery cell 20 through the pressure relief passage 2133.

Moreover, in addition to the pressure relief passage 2133, the pressure relief mechanism 213 further includes the first pressure relief element 2131 and the second pressure relief element 2132 that may be disposed on the pressure relief passage 2133 and close the pressure relief passage 2133 separately. Optionally, the two pressure relief elements may be pressure sensitive elements and have respective opening pressures. For example, specifically, when a pressure on one side, facing the internal space of the casing 210, of a pressure relief element is greater than the opening pressure, the pressure relief element is actuated and opened to allow an emission from the internal space of the casing 210 to pass therethrough.

As an example, the two pressure relief elements include but are not limited to a sheet structure. Thus, the two pressure relief elements can be mounted on the cover plate 212 conveniently without occupying excessive space. In other examples, the two pressure relief elements may also be of structures in other forms according to actual situations. The embodiments of the present disclosure do not particularly limit the specific form of the pressure relief elements.

In the venting direction of the pressure relief passage 2133, the second pressure relief element 2132 is disposed upstream of the first pressure relief element 2131 and communicated with the internal space of the casing 210. In some embodiments, the second pressure relief element 2132 may be disposed at one end, facing the internal space of the casing 210, of the pressure relief passage 2133, and the first pressure relief element 2131 may be disposed at one end, facing the external space for the casing 210, of the pressure relief passage 2133. In this way, it can be realized that the first pressure relief element 2131 and the second pressure relief element 2132 close the two ends of the pressure relief passage 2133 while the second pressure relief element 2132 is communicated with the internal space of the casing 210.

During running of the battery cell 20, the electrode assemblies 22 and the electrolyte solution accommodated in the internal space of the casing 210 react to produce a changing reaction gas which generates a changing gas pressure acting on the second pressure relief element 2132 communicated with the internal space of the casing 210. To enable the second pressure relief element 2132 to better absorb and resist the changing gas pressure, the rigidity of the second pressure relief element 2132 may meet a certain requirement, e.g., be greater than or equal to 25 N/mm.

With the technical solution of the embodiment of the present disclosure, the pressure relief mechanism 213 of the battery cell 20 includes two pressure relief elements disposed on the pressure relief passage 2133, wherein in the venting direction of the pressure relief passage 2133, the second pressure relief element 2132 is disposed upstream of the first pressure relief element 2311 and communicated with the internal space of the casing 210, and the second pressure relief element has a rigidity of greater than or equal to 25 N/mm. Therefore, before being opened, the second pressure relief element 2132 is capable of absorbing and resisting the changing gas pressure in the internal space of the casing 210, and may have a small deformation quantity caused by the changing gas pressure. While preventing the changing gas pressure from acting directly on the first pressure relief element 2131, the second pressure relief element 2132, based on its great rigidity, is capable of further reducing the influence of the changing gas pressure on the first pressure relief element 2131, and thus may play a good role in protecting the first pressure relief element 2131. Therefore, an aging rate of the first pressure relief element 2131 is low. That is, an attenuation rate of the opening pressure of the first pressure relief element 2131 is lows. An ex-factory initial opening pressure of the first pressure relief element 2131 may be designed to be relatively small to guarantee the safety performance of the battery cell 20.

For ease of understanding, the following Table 1 shows example values of the opening pressure of two pressure relief mechanisms 213 provided in an embodiment of the present disclosure.

**Table 1**

| | Example 1 | Example 2 |
|---|---|---|
| Initial opening pressure (Mpa) of first pressure relief element 2131 | Null | 0.3 |
| Initial opening pressure (Mpa) of second pressure relief element 2132 | 0.7 | 0.5 |
| Initial opening pressure (Mpa) of pressure relief mechanism 213 | 0.7 | 0.536 |
| Opening pressure (Mpa) of pressure relief mechanism 213 after aging | 0.27 | 0.286 |

As shown in the above Table 1, in Example 1, the pressure relief mechanism 213 includes only one second pressure relief element 2132 and does not include the first pressure relief element 2131. Therefore, in Example 1, the initial opening pressure of the pressure relief mechanism 213 is the initial opening pressure of the second pressure relief element 2132. In Example 2, the pressure relief mechanism 213 includes the first pressure relief element 2131 and the second pressure relief element 2132. Under a same aging condition, the opening pressure of the pressure relief mechanism 213 after aging in Example 2 is close to the opening pressure of the pressure relief mechanism 213 after aging in Example 1, but the initial opening pressure of the pressure relief mechanism 213 in Example 2 is far below the initial opening pressure of the pressure relief mechanism 213 in Example 1. Therefore, compared with Example 1, with the technical solution of Example 2, on the basis of guaranteeing that the opening pressure of the pressure relief mechanism 213 after aging is within a certain threshold range to guarantee the safety performance of the aged battery cell 20, the initial opening pressure of the pressure relief mechanism 213 may also be reduced to further improve and enhance the safety performance of the battery cell 20.

Optionally, in an embodiment of the present disclosure, the rigidity of the second pressure relief element 2132 is greater than or equal to a rigidity of the first pressure relief element 2131.

Specifically, in this embodiment, the second pressure relief element 2132 has a relatively high rigidity and is capable of playing a good role in protecting the first pressure relief element 2131. In addition, the first pressure relief element 2131 has a relatively low rigidity, and in the event that the first pressure relief element 2131 and the second pressure relief element 2132 are made of a same material, the first pressure relief element 2131 may have a smaller thickness than the second pressure relief element 2132 so that space needed to mount the first pressure relief element 2131 can be reduced.

As a non-limiting example, a ratio of the rigidity of first pressure relief element 2131 to the rigidity of the second pressure relief element 2132 ranges from 20% to 80%.

In addition, in this embodiment, for the first pressure relief element 2131 and the second pressure relief element 2132, in the case of a same area and a same pressure, a deformation quantity of the second pressure relief element 2132 is less than that of the first pressure relief element 2131. As a non-limiting example, the deformation quantity of the second pressure relief element 2132 is 50% to 90% of that of the first pressure relief element 2131. Therefore, the small deformation quantity of the second pressure relief element 2132 has less influence on the gas pressure in the pressure relief passage 2133 and further has less influence on the first pressure relief element 2131 so that the first pressure relief element 2131 can have a long service life and be reliable in use.

Optionally, in an embodiment of the present disclosure, to enable the second pressure relief element 2132 to have a great rigidity and a small deformation quantity, a material of the second pressure relief element 2132 includes but is not limited to metal materials, e.g., aluminum, an aluminum alloy or steel, wherein the aluminum alloy includes but is not limited to: aluminum-manganese (Al-Mn) alloy or aluminum-magnesium (Al-Mg) alloy and the like.

In addition, a material of the first pressure relief element 2131 may be the same as the material of the second pressure relief element 2132. For example, the material of the first pressure relief element 2131 and the material of the second pressure relief element 2132 are both aluminum.

Or, the material of the first pressure relief element 2131 may also be different from the material of the second pressure relief element 2132, wherein the material of the second pressure relief element 2132 has a greater rigidity than the material of the first pressure relief element 2131. For example, the material of the first pressure relief element 2131 is aluminum, and the material of the second pressure relief element 2132 is an aluminum alloy or steel.

Optionally, in some embodiments, weak zones may be defined on the first pressure relief element 2131 and the second pressure relief element 2132. with the design of the weak zones, the design of the initial opening pressures of the two pressure relief elements may be realized. Specifically, in the present disclosure, before the battery cell 20 comes into use, i.e., when the battery cell 20 just leaves the factory, the opening pressure of a pressure relief element thereof may be referred to as the initial opening pressure.

For the second pressure relief element 2132, when the pressure in the internal space of the casing 210 is greater than or equal to its opening pressure, the weak zone of the second pressure relief element 2132 is cracked such that the second pressure relief element 2132 is opened, and the gas in the internal space of the casing 210 may be vented to the pressure relief passage 2133 and the first pressure relief element 2131 through the weak zone. Similarly, for the first pressure relief element 2131, when the pressure in the pressure relief passage 2133 is greater than or equal to its opening pressure, the weak zone of the first pressure relief element 2131 is cracked such that the first pressure relief element 2131 is opened, and the gas in the internal space of the casing 210 may be vented out of the casing 210 through the weak zone.

As a non-limiting example, the weak zones on the first pressure relief element 2131 and the second pressure relief element 2132 may be in the forms of a groove, a nick and the like. The weak zone may have a greater strength than other zone of a pressure relief element. In the case of a same pressure on the pressure relief element, the weak zone is easier to crack than the other zone such that the pressure relief element releases the internal pressure of the casing 210 of the battery cell 20 through the weak zone.

Optionally, in some other embodiments, the first pressure relief element 2131 and the second pressure relief element 2132 may also have no weak zone. The first pressure relief element 2131 and the second pressure relief element 2132 are of a sheet structure having an even thickness. The design of the initial opening pressures of the two pressure relief elements may also be realized by designing a thickness of the first pressure relief element 2131 and the second pressure relief element 2132.

Optionally, in an embodiment of the present disclosure, the initial opening pressure of the second pressure relief element 2132 is greater than or equal to a preset threshold so that the second pressure relief element 2132 can keep a closed state within a certain time range without being actuated and opened, thereby playing a role in protecting the first pressure relief element 2131. Specifically, since the gas pressure in the internal space of the casing 210 directly acts on the second pressure relief element 2132, which may cause rapid attenuation of the opening pressure of the second pressure relief element 2132, the initial opening pressure of the second pressure relief element 2132 is designed to be large so that the second pressure relief element 2132 can keep the closed state within a certain time range.

As a non-limiting example, the initial opening pressure of the second pressure relief element 2132 is greater than or equal to 0.2 MPa.

With the technical solution of the embodiment, because of having a certain initial opening pressure, the second pressure relief element 2132 can be prevented from being actuated and opened at an initial running stage of the battery cell 20. Therefore, the second pressure relief element 2132 can keep the closed state at the initial running stage of the battery cell 20 and absorb a gas pressure change in the internal space of the casing 210 within a certain time range, thereby playing a role in effectively protecting the first pressure relief element 2131 within a certain time range.

Optionally, in an embodiment of the present disclosure, the initial opening pressure of the second pressure relief element 2132 is greater than or equal to the initial opening pressure of the first pressure relief element 2131.

As a non-limiting example, the initial opening pressure of the second pressure relief element 2132 is 1 to 3 times the initial opening pressure of the first pressure relief element 2131.

With the technical solution of the embodiment, the second pressure relief element 2132 has a larger initial opening pressure and the first pressure relief element 2131 has a smaller initial opening pressure. At an early running stage of the battery cell 20, the second pressure relief element 2132 serves for protecting the first pressure relief element 2131 to prevent rapid aging of the first pressure relief element 2131. After the battery cell 20 runs for a period of time and the second pressure relief element 2132 is actuated and opened, the first pressure relief element 2131 having the smaller initial opening pressure is capable of achieving a good pressure relief effect on the battery cell 20 to guarantee the safety performance of the battery cell 20.

In addition, compared with the technical solution that the initial opening pressure of the second pressure relief element 2132 is smaller than the initial opening pressure of the first pressure relief element 2131. In the technical solution of the embodiment of the present disclosure, the first pressure relief element 2131 may play a role in strengthening the second pressure relief element 2132 having the larger initial opening pressure by means of a closed space in the pressure relief passage 2133 such that the pressure relief mechanism 213 has a large overall initial opening pressure to further guarantee the safety performance of the battery cell 20.

For ease of understanding, the following Table 2 shows example values of the initial opening pressures of several first pressure relief elements 2131, second pressure relief elements 2132 and pressure relief mechanisms 213 provided in an embodiment of the present disclosure.

**Table 2**

| | Exampl e3 | Exampl e4 | Exampl e 5 | Exampl e 6 | Exampl e7 | Exampl e8 |
|---|---|---|---|---|---|---|
| Initial opening pressure (Mpa) of first pressure relief element 2131 | 0.3 | 0.4 | 0.3 | 0.3 | 0.3 | 0.4 |
| Initial opening pressure (Mpa) of second pressure relief element 2132 | 0.1 | 0.3 | 0.3 | 0.5 | 0.7 | 0.5 |
| Initial opening pressure (Mpa) of pressure relief mechanism 213 | 0.291 | 0.395 | 0.34 | 0.536 | 0.73 | 0.553 |

As shown in the above Table 2, in Example 3 and Example 4, the initial opening pressure of the second pressure relief element 2132 is smaller than the initial opening pressure of the first pressure relief element 2131. Specifically, in Example 3 and Example 4, when the gas pressure of the internal space of the casing 210 reaches 0.1 MPa or 0.3 MPa, the second pressure relief element 2132 is actuated and opened. The second pressure relief element 2132 may have a certain impact on the first pressure relief element 2131 and thus may affect the performance of the first pressure relief element 2131, thereby affecting the opening pressure thereof. Therefore, in Example 3 and Example 4, the initial opening pressure of the pressure relief mechanism 213 is slightly smaller than the initial opening pressure of the first pressure relief element 2131.

In Example 5 to Example 8, the initial opening pressure of the second pressure relief element 2132 is greater than or equal to the initial opening pressure of the first pressure relief element 2131. Specifically, in these examples, before the second pressure relief element 2132 is actuated and opened, the first pressure relief element 2131 plays a role in strengthening the second pressure relief element 2132 by means of the closed space in the pressure relief mechanism 213. Therefore, the initial opening pressure of the pressure relief mechanism 213 may be slightly smaller than the initial opening pressure of the second pressure relief element 2132. With the design that the first pressure relief element 2131 and the second pressure relief element 2132 coordinate with each other, the second pressure relief element 2132 may be enabled to resist and absorb a greater gas pressure change, further improving the protection effect of the second pressure relief element 2132 on the first pressure relief element 2131 and guaranteeing the safety performance of the battery cell 20.

Optionally, in an embodiment of the present disclosure, the area of the second pressure relief element 2132 may be equal to the area of the first pressure relief element 2131. Or, the area of the second pressure relief element 2132 may also be smaller than the area of the first pressure relief element 2131.

Optionally, in an embodiment of the present disclosure, the first pressure relief element 2131 and the second pressure relief element 2132 may also be of a sheet structure having a small size in a thickness direction, and two surfaces in the thickness direction may have an equal area. The area of the first pressure relief element 2131 may refer to an area of any surface of the first pressure relief element 2131 of the sheet structure in the thickness direction. Similarly, the area of the second pressure relief element 2132 may refer to an area of any surface of the second pressure relief element 2132 of the sheet structure in the thickness direction.

Specifically, in the event that the area of the second pressure relief element 2132 is equal to the area of the first pressure relief element 2131, the first pressure relief element 2131 and the second pressure relief element 2132 may be manufactured and mounted conveniently, and the manufacturing efficiency of the pressure relief mechanism 213 and the battery cell 20 can be improved.

Or, in the event that the area of the second pressure relief element 2132 is smaller than the area of the first pressure relief element 2131, when the gas pressure in the internal space of the casing 210 acts on the second pressure relief element 2132, the deformation quantity of the second pressure relief element 2132 is small. Hence, the deformation of the second pressure relief element 2132 has less influence on the gas pressure in the pressure relief passage 2133 and the first pressure relief element 2131, and the performance of the first pressure relief element 2131 can be further guaranteed to guarantee the safety performance of the battery cell 20.

As a non-limiting example, a ratio of the area of the second pressure relief element 2132 to the area of the first pressure relief element 2131 ranges from 40% to 100%. In this example, on the basis that the area of the second pressure relief element 2132 is smaller than or equal to that of the first pressure relief element 2131, the second pressure relief element 2132 has a certain area so that the second pressure relief element 2132 can be manufactured and mounted conveniently and can achieve a good pressure relief effect.

Optionally, in an embodiment of the present disclosure, in addition to the design that the area of the second pressure relief element 2132 is smaller than the area of the first pressure relief element 2131 to reduce the influence of the deformation of the second pressure relief element 2132 on the first pressure relief element 2131, it may also be designed that the pressure relief passage 2133 between the first pressure relief element 2131 and the second pressure relief element 2132 has a volume greater than or equal to a certain preset threshold such that the deformation of the second pressure relief element 2132 has less influence on the gas pressure in the pressure relief passage 2133, thus reducing the influence of the deformation of the second pressure relief element 2132 on the first pressure relief element 2131.

As a non-limiting example, the volume of the pressure relief passage 2133 may be greater than or equal to 0.35 mL.

In addition, to avoid that the pressure relief passage 2133 having a large volume occupies more space of the battery cell 20 to affect an energy density of the battery cell 20, the volume of the pressure relief passage 2133 may be less than or equal to a preset threshold. For example, the volume of the pressure relief passage 2133 may be smaller than or equal to 130 mL.

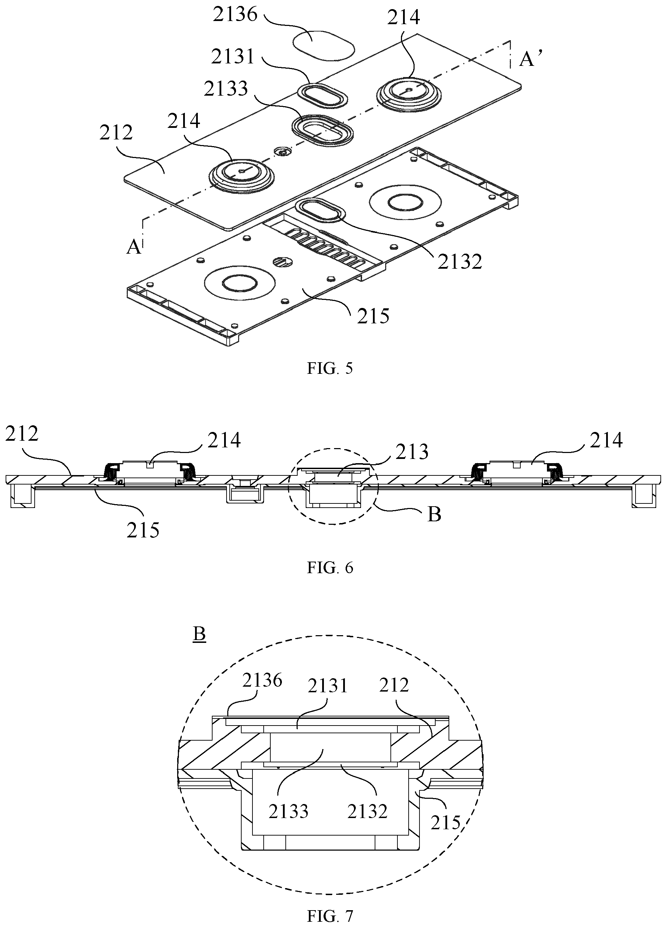

To realize the arrangement and mounting of the pressure relief mechanism 213 formed by the first pressure relief element 2131, the second pressure relief element 2132 and the pressure relief passage 2133 in the above embodiment in a battery cell 20, FIG. 5 illustrates a partially exploded structural schematic diagram of a battery cell 20 provided in one embodiment of the present disclosure. FIG. 6 illustrates a cross-sectional schematic view taken along A-A' in FIG. 5.

Optionally, as shown in FIG. 5 and FIG. 6, in an embodiment of the present disclosure, the pressure relief mechanism 213 and two electrode terminals 214 of the battery cell 20 may be all disposed on the cover plate 212. In addition, an injection hole for injecting an electrolyte solution into the internal space of the casing 210 may also be disposed on the cover plate 212. Therefore, in this embodiment, the pressure relief mechanism 213, the electrode terminals 214, the injection hole and the like may all be disposed on a same wall (i.e., the cover plate 212) of the casing 210, thereby facilitating unified mounting of the plurality of components in the battery cell 20 and being conducive to improving the production efficiency of the battery 10. As a matter of course, in other embodiments, the pressure relief mechanism 213 and the electrode terminals 214 may be disposed on different walls of the casing 210. For example, only the pressure relief mechanism 213 is disposed on a wall of the casing 210 without other components.

In the examples shown in FIG. 5 and FIG. 6, a plastic part 215 is disposed on a side, facing the internal space of the casing 210, of the cover plate 212. The plastic part 215 and the cover plate 212 may be buckled to each other and mounted in the housing 211 as a whole. The plastic part 215 may serve for protecting the components disposed on the cover plate 212, improving the use reliability and safety performance of the battery cell 20.

It will be understood that the plastic part 215 has a cavity formed on a side, facing the internal space of the casing 210, of the pressure relief mechanism 213, and a through hole may be formed in the cavity to allow the gas in the internal space of the casing 210 to pass therethrough and reach the pressure relief mechanism 213. In addition, through holes are also formed in the plastic part 215 at positions corresponding to the electrode terminals 214 and the injection hole so that the electrode terminals 214 and the electrode assemblies 22 can be connected to each other through the through holes, and the electrolyte solution is injected into the internal space of the casing 210 through the injection hole and the through hole.

Optionally, as shown in FIG. 5 and FIG. 6, to save the mounting space of the pressure relief mechanism 213 on the cover plate 212, the pressure relief mechanism 213 may be completely disposed within the cover plate 212. In other words, not only can the through hole in the cover plate 212 be formed into the pressure relief passage 2133 of the pressure relief mechanism 213, but also an accommodating region can be defined around the through hole to accommodate the first pressure relief element 2131 and the second pressure relief element 2132. With the technical solution of this embodiment, not only can the space needed by the pressure relief mechanism 213 be reduced, but also the accommodating region in the cover plate 212 may play a good role in protecting the first pressure relief element 2131 and the second pressure relief element 2132 to guarantee the overall performance of the pressure relief mechanism 213.

As a matter of course, to reduce the manufacturing cost, the cover plate 212 may also have no extra accommodating region. The first pressure relief element 2131 and the second pressure relief element 2132 may also be directly attached on two surfaces of the cover plate 212 and close the through hole as the pressure relief passage 2133 in the cover plate 212.

FIG. 7 illustrates a partially enlarged schematic view of part B in FIG. 6.

as shown in FIG. 7, in an embodiment of the present disclosure, the area of the first pressure relief element 2131 is equal to the area of the second pressure relief element 2132. A cross-sectional area of the pressure relief passage 2133 between the first pressure relief element 2131 and the second pressure relief element 2132 in an axial direction thereof is smaller than the area of the first pressure relief element 2131 and the area of the second pressure relief element 2132, and the first pressure relief element 2131 and the second pressure relief element 2132 close two ends of the pressure relief passage 2133, respectively.

To protect the first pressure relief element 2131 and the second pressure relief element 2132, in the embodiment shown in FIG. 7, the cover plate 212 has grooves formed at the two ends of the pressure relief passage 2133, respectively, to accommodate the first pressure relief element 2131 and the area of the second pressure relief element 2132. The two grooves cover and are communicated with the two ends of the pressure relief passage 2133, respectively, so that the first pressure relief element 2131 and the area of the second pressure relief element 2132 in the two grooves can close the two ends of the pressure relief passage 2133.

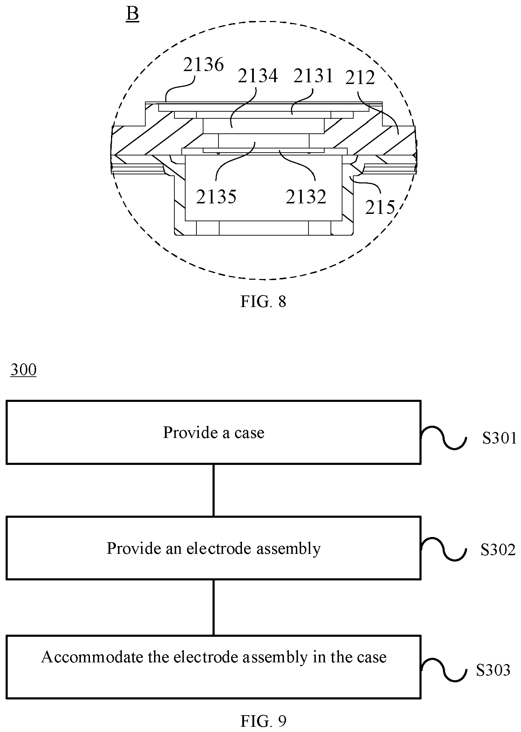

FIG. 8 illustrates another partially enlarged schematic view of part B in FIG. 6.

As shown in FIG. 8, in an embodiment of the present disclosure, the area of the second pressure relief element 2132 is smaller than the area of the first pressure relief element 2131. The pressure relief passage 2133 includes a first portion passage 2134 and a second portion passage 2135, wherein in the venting direction of the pressure relief passage 2133, the second portion passage 2135 is disposed upstream of the first portion passage 2134, and the two portion passages are connected to each other. In addition, to adapt to the second pressure relief element 2132 and the first pressure relief element 2131, a cross-sectional area of the second portion passage 2135 in a radial direction thereof is smaller than a cross-sectional area of the first portion passage 2134 in a radial direction thereof. The first pressure relief element 2131 covers an end, facing an external space for the casing 210, of the first portion passage 2134, and the second pressure relief element 2132 covers an end, facing the internal space of the casing 210, of the second portion passage 2135.

With the technical solution of the embodiment of the present disclosure, the pressure relief passage 2133 is designed as a two-section structure, wherein the cross-sectional areas of the first portion passage 2134 and the second portion passage 2135 are different so that the first pressure relief element 2131 and the second pressure relief element 2132 having different areas can be disposed on the first portion passage 2134 and the second portion passage 2135, respectively, and the pressure relief passage 2133 is closed with the first pressure relief element 2131 and the second pressure relief element 2132. In the event that the area of the second pressure relief element 2132 is smaller than the area of the first pressure relief element 2131, when the gas pressure in the internal space of the casing 210 acts on the second pressure relief element 2132, the deformation quantity of the second pressure relief element 2132 is small. Hence, the deformation of the second pressure relief element 2132 has less influence on the pressure relief passage 2133 and the first pressure relief element 2131, and the performance of the first pressure relief element 2131 can be further guaranteed to guarantee the safety performance of the battery cell 20.

Similar to the embodiment shown in FIG. 7, Optionally, in the embodiment shown in FIG. 8, the cover plate 212 is provided with grooves at an end, facing the external space for the casing 210, of the first portion passage 2134 and an end, facing the internal space of the casing 210, of the second portion passage 2135, respectively. The two grooves are configured to accommodate and protect the first pressure relief element 2131 and the second pressure relief element 2132, and sizes of the two grooves may be adapted to sizes of the first pressure relief element 2131 and the second pressure relief element 2132, respectively, facilitating the arrangement and mounting of the two pressure relief elements in the grooves.

Further, referring continuously to FIG. 5, FIG. 7 and FIG. 8, the pressure relief mechanism 213 may also include: a protective layer 2136 disposed on a side, facing the external space for the casing 210, of the first pressure relief element 2131 and configured to protect the first pressure relief element 2131.

Specifically, the protective layer 2136 includes but is not limited to a platy plastic protective layer which may prevent the environment outside the casing 210 from affecting the first pressure relief element 2131, thereby guaranteeing the performance of the first pressure relief element 2131 to improve the safety performance of the battery cell 20.

Optionally, as shown in FIG. 7 and FIG. 8, an air gap may be formed between the protective layer 2136 and the first pressure relief element 2131. That is, the protective layer 2136 is not directly attached to the first pressure relief element 2131 and indirectly covers the first pressure relief element 2131 through the air gap. In this embodiment, while playing a role in protecting the first pressure relief element 2131, the protective layer 2136 may not affect the actuating and opening of the first pressure relief element 2131, thus further guaranteeing the performance of the first pressure relief element 2131 to further improve the safety performance of the battery cell 20.

Optionally, to form the air gap between the protective layer 2136 and the first pressure relief element 2131, a protrusion structure facing the external space for the casing 210 may be further formed at an edge of the groove of the cover plate 212 that accommodates the first pressure relief element 2131, and the protective layer 2136 is disposed on the protrusion structure such that the air gap is formed between the protective layer 2136 and the first pressure relief element 2131.

One embodiment of the present disclosure further provides a battery 10. The battery 10 may include a box 100 and one or more battery cells 20 in the foregoing embodiments, wherein the one or more battery cells 20 are accommodated in the box 100.

One embodiment of the present disclosure further provides a power consumption device that may include the battery 10 in the foregoing embodiment, and the battery 10 is configured to provide electric power for the power consumption device.

Optionally, the power consumption device may be a vehicle 1, a ship or a spacecraft.

The battery cell 20, the battery 10 and the power consumption device of the embodiments of the present disclosure are described above. A method and device for producing a battery cell according to embodiments of the present disclosure will be described below, wherein the parts not described in detail may be known with reference to the foregoing embodiments.

FIG. 9 illustrates a flowchart of a method 300 for producing a battery cell according to one embodiment of the present disclosure. As shown in FIG. 9, the method 300 may include the following steps.

S301: a casing 210 is provided. A pressure relief mechanism 213 is disposed on the casing 210 and the pressure relief mechanism 213 includes: a pressure relief passage 2133 configured to vent a gas out of the casing 210 from an internal space of the casing 210; and a first pressure relief element 2131 and a second pressure relief element 2132 that are disposed on the pressure relief passage 2133 and close the pressure relief passage 2133 separately. In a venting direction of the pressure relief passage 2133, the second pressure relief element 2132 is disposed upstream of the first pressure relief element 2131 and communicated with the internal space of the casing 210, wherein the second pressure relief element 2132 has a rigidity of greater than or equal to 25 N/mm.

S302: an electrode assembly 22 is provided.

S303: the electrode assembly 22 is accommodated in the casing 210.

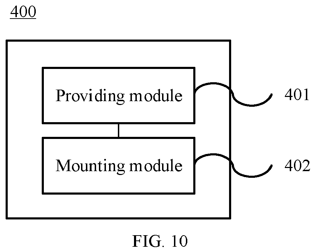

FIG. 10 illustrates a schematic block diagram of a device 400 for producing a battery cell according to one embodiment of the present disclosure. As shown in FIG. 10, the device 400 for producing a battery cell may include: a providing module 401 and a mounting module 402.

The providing module 401 is configured to provide a casing 210 and an electrode assembly 22. A pressure relief mechanism 213 is disposed on the casing 210 and the pressure relief mechanism 213 includes: a pressure relief passage 2133 configured to vent a gas out of the casing 210 from an internal space of the casing 210; and a first pressure relief element 2131 and a second pressure relief element 2132 that are disposed on the pressure relief passage 2133 and close the pressure relief passage 2133 separately. In a venting direction of the pressure relief passage 2133, the second pressure relief element 2132 is disposed upstream of the first pressure relief element 2131 and communicated with the internal space of the casing 210, wherein the second pressure relief element 2132 has a rigidity of greater than or equal to 25 N/mm.

The mounting module 402 is configured to accommodate the electrode assembly 22 in the casing 210.

Although the present disclosure has been described with reference to the preferred embodiments, without departing from the scope of the present disclosure, various improvements can be made thereto and components therein can be replaced with equivalents. In particular, as long as there is no structural conflict, the technical features mentioned in the embodiments can be combined in any way. The present disclosure is not limited to the specific embodiments disclosed herein, but include all technical solutions falling within the scope of the claims.

## Claims

1. A battery cell (20), comprising:
a casing (210) configured to accommodate an electrode assembly (22); and
a pressure relief mechanism (213) disposed on the casing (210), wherein the pressure relief mechanism (213) comprises:
a pressure relief passage (2133) configured to vent a gas out of the casing (210) from an internal space of the casing (210); and
a first pressure relief element (2131) and a second pressure relief element (2132) that are disposed on the pressure relief passage (2133) and close the pressure relief passage (2133) separately;
in a venting direction of the pressure relief passage (2133), the second pressure relief element (2132) is disposed upstream of the first pressure relief element (2131) and communicated with the internal space of the casing (210);
wherein the second pressure relief element (2132) has a rigidity of greater than or equal to 25 N/mm.

2. The battery cell (20) according to claim 1, wherein the rigidity of the second pressure relief element (2132) is greater than or equal to a rigidity of the first pressure relief element (2131).

3. The battery cell (20) according to claim 2, wherein a ratio of the rigidity of the first pressure relief element (2131) to the rigidity of the second pressure relief element (2132) ranges from 20% to 80%.

4. The battery cell (20) according to any one of claims 1 to 3, wherein the second pressure relief element (2132) has an initial opening pressure of greater than or equal to 0.2 MPa.

5. The battery cell (20) according to any one of claims 1 to 4, wherein an initial opening pressure of the second pressure relief element (2132) is greater than or equal to an initial opening pressure of the first pressure relief element (2131).

6. The battery cell (20) according to claim 5, wherein the initial opening pressure of the second pressure relief element (2132) is 1 to 3 times the initial opening pressure of the first pressure relief element (2131).

7. The battery cell (20) according to any one of claims 1 to 6, wherein an area of the second pressure relief element (2132) is smaller than or equal to an area of the first pressure relief element (2131).

8. The battery cell (20) according to claim 7, wherein a ratio of the area of the second pressure relief element (2132) to the area of the first pressure relief element (2131) ranges from 40% to 100%.

9. The battery cell (20) according to claim 7 or 8, wherein the pressure relief passage (2133) comprises a first portion passage (2134) and a second portion passage (2135); in the venting direction of the pressure relief passage (2133), the second portion passage (2135) is disposed upstream of the first portion passage (2134), and a cross-sectional area of the second portion passage (2135) in a radial direction thereof is smaller than a cross-sectional area of the first portion passage (2134) in a radial direction thereof;
the first pressure relief element (2131) covers an end, facing an external space for the casing (210), of the first portion passage (2134), and the second pressure relief element (2132) covers an end, facing the internal space of the casing (210), of the second portion passage (2135).

10. The battery cell (20) according to any one of claims 1 to 9, wherein the pressure relief passage (2133) has a volume of greater than or equal to 0.35 mL, and/or the pressure relief passage (2133) has a volume of less than or equal to 130 mL.

11. The battery cell (20) according to any one of claims 1 to 10, wherein the pressure relief mechanism (213) further comprises: a protective layer (2136) disposed on a side, facing the external space for the casing (210), of the first pressure relief element (2131) and configured to protect the first pressure relief element (2131).

12. The battery cell (20) according to any one of claims 1 to 11, wherein the first pressure relief element (2131) is made of aluminum, and/or the second pressure relief element (2132) is made of aluminum, an aluminum alloy or steel.

13. A battery (10), comprising a box (100) and the battery cell (20) according to any one of claims 1 to 12, wherein the battery cell (20) is accommodated in the box (100).

14. A power consumption device, comprising the battery (10) according to claim 13, wherein the battery (10) is configured to provide electric power for the power consumption device.

15. A method for producing a battery cell, comprising:
providing (S301) a casing (210), wherein a pressure relief mechanism (213) is disposed on the casing (210) and the pressure relief mechanism (213) comprises:
a pressure relief passage (2133) configured to vent a gas out of the casing (210) from an internal space of the casing (210); and
a first pressure relief element (2131) and a second pressure relief element (2132) that are disposed on the pressure relief passage (2133) and close the pressure relief passage (2133) separately; and
in a venting direction of the pressure relief passage (2133), the second pressure relief element (2132) is disposed upstream of the first pressure relief element (2131) and communicated with the internal space of the casing (210);
wherein the second pressure relief element (2132) has a rigidity of greater than or equal to 25 N/mm;
providing (S302) an electrode assembly (22); and
accommodating (S303) the electrode assembly (22) in the casing (210).

16. A device for producing a battery cell, comprising:
a providing module (401) configured to provide a casing (210) and an electrode assembly (22), wherein a pressure relief mechanism (213) is disposed on the casing (210) and the pressure relief mechanism (213) comprises:
a pressure relief passage (2133) configured to vent a gas out of the casing (210) from an internal space of the casing (210); and
a first pressure relief element (2131) and a second pressure relief element (2132) that are disposed on the pressure relief passage (2133) and close the pressure relief passage (2133) separately; and
in a venting direction of the pressure relief passage (2133), the second pressure relief element (2132) is disposed upstream of the first pressure relief element (2131) and communicated with the internal space of the casing (210);
wherein the second pressure relief element (2132) has a rigidity of greater than or equal to 25 N/mm; and
a mounting module (402) configured to accommodate the electrode assembly (22) in the casing (210).
